# EUROPEAN PATENT APPLICATION

(11) **EP 4 723 789 A1**
(43) Date of publication of application: **08.04.2026**
(21) Application number: 23939010.7
(22) Date of filing: 02.06.2023
(51) Int. Cl.: H04W 74/08

(54) **PROCESSING METHOD, APPARATUS, DEVICE, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); LI, Yanhua, Beijing 100085 (CN)
(74) Representative: Stöckeler, Ferdinand
(86) International application number: PCT/CN2023/098171
(87) International publication number: WO 2024/244026

(57) **Abstract**

The present disclosure provides a processing method, an apparatus, a device, and a storage medium. The method comprises: in response to a lower layer of a terminal receiving a second channel for scheduling a first channel, and a resource occupied by the first channel exceeding a first channel baseband bandwidth of the terminal, the lower layer does not inform a higher layer of the terminal that the second channel has been received, or the lower layer performs a first operation for the higher layer, wherein the first operation comprises at least one of the following: informing that the second channel has been received, and informing that the reception of the second channel is an invalid reception. For such scenario "when the terminal determines that a resource occupied by the first channel exceeds a first channel baseband bandwidth of the terminal", the present disclosure provides a method for interaction between a lower layer and a higher layer of a terminal, so that the higher layer of the terminal determines whether the terminal has a contention resolution failure, thereby clearly defining an execution procedure of a random access process, and ensuring stability of random access.

## Description

### FIELD

The disclosure relates to the field of communication technologies, and in particular to a processing method, apparatus, device and storage medium.

### BACKGROUND

**In** a communication system, a reduced capability (RedCap) terminal and a normal terminal (e.g., a legacy terminal) typically engage in a contention for random access. Optionally, when the contention for random access occurs between the RedCap terminal and the legacy terminal, the RedCap terminal determines whether a contention resolution failure occurs based on a size of resources occupied by an Msg4 or an MsgB it receives.

However, the aforementioned Msg4 or MsgB is received by a lower layer of the RedCap terminal, while a random access-related decision (such as determining the contention resolution failure) is executed by a higher layer of the RedCap terminal. How the lower layer and the higher layer of the RedCap terminal interact to determine the contention resolution failure for the RedCap terminal has not yet been specified.

### SUMMARY

The present disclosure provides a processing method, apparatus, device and storage medium.

**In** a first aspect, embodiments of the disclosure provide a processing method, including: in response to a lower layer of a terminal receiving a second channel for scheduling a first channel and resources occupied by the first channel exceeding a first channel baseband bandwidth of the terminal, not notifying, by the lower layer, a higher layer of the terminal that the second channel is received, or performing, by the lower layer, a first operation to notify the higher layer, where the first operation includes at least one of: notifying that the second channel is received, or notifying that the second channel received is invalid.

**In** a second aspect, embodiments of the disclosure provide a communication device, including: a processing module, configured to: in response to a lower layer of a terminal receiving a second channel for scheduling a first channel and resources occupied by the first channel exceeding a first channel baseband bandwidth of the terminal, not notify, by the lower layer, a higher layer of the terminal that the second channel is received, or perform, by the lower layer, a first operation to notify the higher layer, where the first operation includes at least one of: notifying that the second channel is received, or notifying that the second channel received is invalid.

In a third aspect, embodiments of the disclosure provide a communication device. The communication device includes a processor. When the processor calls a computer program in a memory, the method as described in the first aspect is performed.

In a fourth aspect, embodiments of the disclosure provide a communication device. The communication device includes a processor and a memory. The memory is stored with a computer program, and the processor is configured to execute the computer program stored in the memory, so that the communication device performs the method as described in the first aspect.

In a fifth aspect, embodiments of the disclosure provide a communication device. The communication device includes a processor and an interface circuit. The interface circuit is configured to receive code instructions and transmit the code instructions to the processor, and the processor is configured to run the code instructions, so that the communication device performs the method as described in the first aspect.

In a sixth aspect, embodiments of the disclosure provide a communication system. The communication system includes the communication device as described in the second aspect, or the communication system includes the communication device as described in the third aspect, or the communication system includes the communication device as described in the fourth aspect, or the communication system includes the communication device as described in the fifth aspect.

In a seventh aspect, embodiments of the disclosure provide a computer-readable storage medium. The computer-readable storage medium is configured to store instructions used by the network device above. When the instructions are executed, the terminal is caused to perform the method as described in the first aspect.

In an eighth aspect, embodiments of the disclosure provide a computer program product including a computer program. When the computer program is running on a computer, the computer is caused to perform the method as described in the first aspect.

In ninth aspect, embodiments of the disclosure provide a chip system. The chip system includes at least one processor and an interface, and is configured to support a network device to implement functions involved in the first aspect, for example, to determine or process at least one of data or information involved in the above methods. In a possible design, the chip system further includes a memory. The memory is configured to save a necessary computer program and data for the network device. The chip system may be constituted by a chip, or may include a chip and other discrete devices.

**In** a tenth aspect, embodiments of the disclosure provide a computer program. When the computer program is running on a computer, the computer is caused to perform the method as described in the first aspect.

### BRIEF DESCRIPTION OF THE DRAWINGS

The above and/or additional aspects and advantages of the present disclosure will become apparent and readily understood from the following description of embodiments taken in conjunction with the accompanying drawings.
FIG. 1 is a diagram illustrating an architecture of a communication system according to an embodiment of the disclosure.
FIG. 2 is a flow chart illustrating a processing method according to an embodiment of the disclosure.
FIG. 3 is a flow chart illustrating another processing method according to an embodiment of the disclosure.
FIG. 4A-4B is a flow chart illustrating another processing method according to an embodiment of the disclosure.
FIG. 5A-5B is a block diagram illustrating a communication device according to an embodiment of the disclosure.
FIG. 6 is a block diagram illustrating a communication device according to an embodiment of the disclosure.
FIG. 7 is a block diagram illustrating a chip according to an embodiment of the disclosure.

### DETAILED DESCRIPTION

Exemplary embodiments will be described in detail herein, with examples thereof illustrated in the accompanying drawings. In the following description, when reference is made to the accompanying drawings, unless otherwise indicated, the same numerals in different drawings represent the same or similar elements. The implementations described in the following exemplary embodiments do not represent all implementations consistent with the embodiments of the present disclosure. Rather, they are merely examples of apparatus and methods consistent with some aspects of the embodiments of the present disclosure as detailed in the appended claims.

The terms used in the embodiments of the present disclosure are for the purpose of describing particular embodiments only, and are not intended to limit the present disclosure. The singular forms "a", "an" and "the" used in the embodiments of the present disclosure and the appended claims are also intended to include plural forms, unless the context clearly indicates otherwise. It should also be understood that the term "and/or" as used herein means and includes any and all possible combinations of one or more of the associated listed items.

It should be understood that although terms such as "first", "second", and "third" can be used in the embodiments of the present disclosure to describe various types of information, such information should not be limited to these terms. These terms are only used to distinguish between information of the same type. For example, without departing from the scope of the embodiments of the present disclosure, first information can also be referred as second information, and similarly, the second information can also be referred as the first information. Depending on the context, term "if" and "in case that" as used herein can be interpreted as "when", "upon", or "in response to determining···".

The following describes embodiments of the present disclosure in detail. Examples of the embodiments are shown in the accompanying drawings, throughout which the same or similar symbols indicate the same or similar elements. The embodiments described with reference to the accompanying drawings are exemplary and are intended to explain the present disclosure, and shall not be construed as a limitation on the present disclosure.

To facilitate understanding, terms related to the disclosure are first introduced.

### 1. Reduced capability (RedCap) terminal.

A RedCap UE is a new technical standard that was specifically studied in a 3GPP work item during the 5G R17 phase, representing a lightweight version of 5G.

### 2. ERedCap terminal.

An eRedCap UE, is a further evolution based on the RedCap UE by 3GPP in the 5G R18 phase. Compared to the RedCap UE, the eRedCap UE has a lower implementation complexity.

The present disclosure is applicable to both an R17 RedCap terminal and an R18 eRedCap terminal. That is, the RedCap terminal in the present disclosure may refer to either the R17 RedCap terminal or the R18 eRedCap terminal.

Optionally, in some embodiments, the aforementioned method "the RedCap terminal determines whether the contention resolution failure occurs based on the size of resources occupied by an Msg4 or MsgB it receives" may include the following steps.

Due to a reduced physical downlink shared channel (PDSCH) baseband bandwidth of the RedCap terminal compared to a normal terminal, in order to ensure a successful communication between a network device and the Redcap terminal, when the network device needs to send a PDSCH channel carrying an Msg4 or MsgB to the Redcap terminal, resources occupied by this PDSCH channel will be limited to not exceed the PDSCH baseband bandwidth of the Redcap terminal. Therefore, optionally, when there is a contention random access between the Redcap terminal and a legacy terminal and the Redcap terminal sends at least one of an Msg1, Msg3, or MsgA, if a lower layer of the RedCap terminal determines that resources occupied by a PDSCH carrying the Msg4 or MsgB received exceed the PDSCH baseband bandwidth of the Redcap terminal, it indicates that the Msg4 or MsgB is intended for the legacy terminal, not for the Redcap terminal. In this case, the RedCap terminal determines the contention resolution failure.

However, as may be seen from the above, when the lower layers of the RedCap terminal determine that the resources occupied by the received PDSCH carrying the Msg4 or MsgB exceed the PDSCH baseband bandwidth of the RedCap terminal, the process of how the lower layer of the Redcap terminal interacts with the higher layers to achieve "determining whether the contention resolution failure occurs" remains unspecified.

The present disclosure provides a processing method that may solve the aforementioned technical problem.

In order to better understand the processing method in the embodiments of the present disclosure, a communication system to which embodiments of the disclosure are applicable is described below.

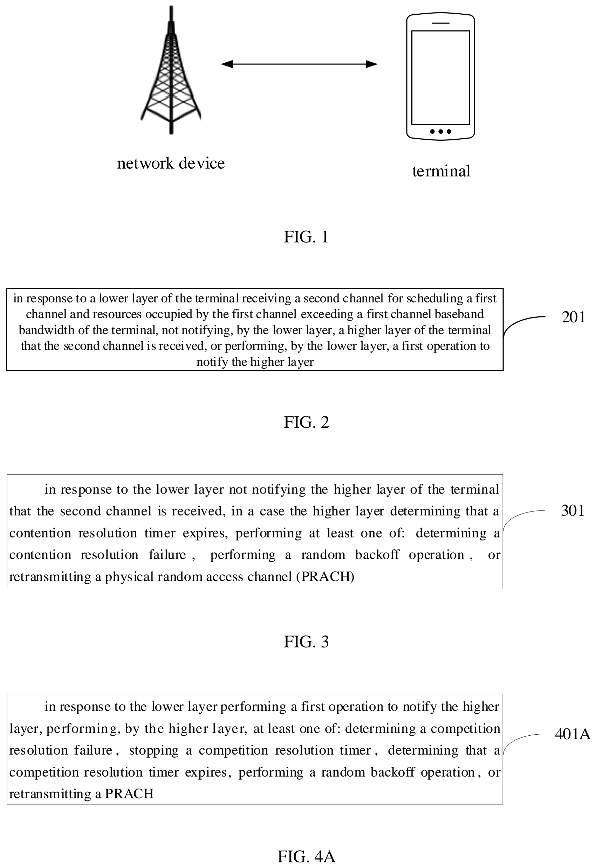

Please refer to FIG. 1. FIG. 1 is a diagram illustrating an architecture of a communication system according to an embodiment of the disclosure. The communication system may include, but is not limited to, one terminal device and one network. And the number and forms of the devices illustrated in FIG. 1 are only for example and do not constitute a limitation to embodiments of the disclosure. In applications, one or more terminals, or one or more network devices, may be included. The communication system as illustrated in FIG. 1 includes one terminal and one network device for example.

It should be noted that technical solutions in embodiments of the disclosure are applicable to various communication systems, such as a long term evolution (LTE) system, a 5th generation (5G) mobile communication system, a 5G new radio (NR) system or other future new mobile communication systems, etc.

The network device in embodiments of the disclosure is an entity, at a network side, for transmitting or receiving a signal. For example, the network device may be an evolved NodeB (eNB), a transmission reception point (TRP), a radio remote head (RRH), a next generation NodeB (gNB) in a NR system, a base station in other future mobile communication systems, an access node in a wireless fidelity (WiFi) system, or the like. A specific technology and a specific device form adopted by the base station are not limited in embodiments of the disclosure. The base station according to embodiments of the disclosure can consist of a central unit (CU) and a distributed unit (DU). The CU can also be referred to as a control unit. The protocol layers of base station can be split by using a structure of the CU-DU, so that functions for a part of the protocol layers are placed in the CU for central control, and functions of a remaining part or all of the protocol layers are distributed in the DU, and the DU is centrally controlled by the CU.

The terminal in embodiments of the disclosure is an entity, at a user side, for receiving or transmitting a signal, for example, a mobile phone. The terminal can be referred to as a user equipment (UE), a mobile station (MS), a mobile terminal (MT), etc. The terminal can be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology and a specific device form adopted by the terminal are not limited in embodiments of the disclosure.

It can be understood that the communication system described in embodiments of the disclosure is intended to explain technical solutions of embodiments of the disclosure more clearly, and does not constitute a limitation to the technical solutions provided by embodiments of the disclosure. Those skilled in the art can know that, with evolution of a system architecture and emergence of a new service scenario, the technical solutions provided in embodiments of the disclosure are also applicable to similar technical problems.

Furthermore, to facilitate the understanding of the embodiments of the present disclosure, the following explanations are provided.

Firstly, in the present disclosure, each step in any implementation or any embodiment can be implemented as an independent embodiment without contradiction, and the steps can be combined arbitrarily. For example, a solution obtained by removing some steps from a certain implementation or embodiment can also be implemented as an independent embodiment, and the order of the steps in a certain implementation or embodiment can be exchanged arbitrarily. In addition, optional methods or examples from a certain implementation or embodiment can be combined arbitrarily. In addition, various implementations or embodiments can be combined arbitrarily, for example, some or all steps from different implementations or embodiments can be combined arbitrarily, and a certain implementation method or embodiment can be combined arbitrarily with optional methods or examples from other implementations or embodiments.

Secondly, regarding the expressions such as "A or B", "A and/or B", "at least one of A and B", "in one case A···, in another case B···", "in response to one case A···, in response to another case B···" used in the present disclosure, depending on the context, can include at least one of the following schemes: executing A regardless of B, i.e., executing A in some implementations; executing B regardless of A, i.e., executing B in some implementations; selectively executing A or B, i.e., in some implementations, selecting to execute either A or B; executing both A and B, i.e., executing both A and B in some implementations.

Thirdly, each element, row, or column in the table disclosed herein can be implemented as an independent embodiment, and any combination of elements, rows, or columns can also be implemented as an independent embodiment.

Fourthly, in some implementations or embodiments, the expressions "including A", "containing A", "using to indicate A", and "carrying A" in the present disclosure can be interpreted as directly carrying A or indirectly indicating A.

Fifth, in some implementations or embodiments, the expressions "in response to...", "in the case that...", "at the time of ...", "when...", "if...", "should...", etc. in this disclosure can be replaced with each other.

FIG. 2 is a flow chart illustrating a processing method according to an embodiment of the disclosure. The method is performed by a terminal. As shown in FIG. 2, the method may include the following steps.

In step 201, in response to a lower layer of the terminal receiving a second channel for scheduling a first channel and resources occupied by the first channel exceeding a first channel baseband bandwidth of the terminal, the lower layer does not notify a higher layer of the terminal that the second channel is received, or the lower layer perform a first operation to notify the higher layer.

Optionally, in some embodiments, the terminal may be a reduced capability (Redcap) terminal or an eRedCap terminal. Optionally, the lower layer of the terminal may include a physical layer, and the higher layer of the terminal may include a media access control (MAC) layer.

Optionally, in some embodiments, the embodiments of the present disclosure may be applied to a random access scenario. Optionally, for example, it may be applied to a scenario where the RedCap terminal (or the eRedCap terminal) and a normal terminal (i.e., a non-RedCap terminal or a non-eRedCap terminal, for example, a legacy terminal) engage in a contention for random access. Optionally, in some embodiments, the Redcap terminal (or the eRedCap terminal) and the normal terminal engaging in the contention for random access may be understood as: the Redcap terminal (or the eRedCap terminal) sending at least one of Msg1, Msg3 or MsgA, using the same time-frequency resource and/or the same preamble as the normal terminal. Alternatively, in other embodiments, the Redcap terminal (or the eRedCap terminal) and the normal terminal engaging in the contention for random access may be understood as the higher layer of the Redcap terminal (or eRedCap terminal) starting a contention resolution timer. Optionally, the contention resolution timer may be used for a contention resolution, and the contention resolution timer may be started when the terminal sends the Msg 3 or Msg A. Optionally, if the terminal confirms a successful random access during the operation of the contention resolution timer, the terminal will stop the contention resolution timer. If the terminal confirms that the random access is not successful when the competition resolution timer expires, it is determined that a contention resolution failure occurs for the terminal. Optionally, the above random access being successful may be understood as the terminal receiving a Msg4 or MsgB and the Msg4 or MsgB including a cell radio network temporary identifier (C-RNTI) of a target cell that the terminal intends to access. Optionally, the random access being not successful mentioned above may be understood as the terminal not receiving the Msg4 or MsgB or the terminal receiving the Msg4 or MsgB but the Msg4 or MsgB not including the C-RNTI of the target cell that the terminal intends to access.

Optionally, in some embodiments, the aforementioned first channel may be used to carry the Msg4 or MsgB. Optionally, the first channel may be sent to the terminal by a network device. In some embodiments, the first channel may be a physical downlink shared channel (PDSCH). Optionally, in some embodiments, the aforementioned second channel may be sent to the terminal by the network device. The second channel may be a physical downlink control channel (PDCCH).

Optionally, in some embodiments, the aforementioned "the second channel for scheduling the first channel" may, for example, be understood as the second channel indicating a starting position, the number of resources, etc., of transmission resources of the first channel. Optionally, after receiving the second channel, the terminal may determine, based on the second channel, resources on which the first channel may be received. Subsequently, the terminal may successfully receive the first channel on these resources determined, and may determine the Msg4 or MsgB based on the first channel received, thereby determining whether the contention resolution is successful.

Optionally, in some embodiments, the aforementioned second channel may also be used to carry first information, and the first information may be used to schedule the second channel. For relevant descriptions regarding the first information being used to schedule the second channel reference may be made to the above content, and details will not be repeated here. Optionally, the first information may, for example, be downlink control information (DCI).

Optionally, in some embodiments, the aforementioned first channel baseband bandwidth of the terminal may be understood as a maximum number of resources that the terminal may process when performing a first channel baseband processing (such as a channel estimation, a channel equalization, a signal detection, a demodulation, etc.). Optionally, for the eRedCap terminal, when a sub-carrier spacing (SCS) is 30 kHz, a first channel baseband bandwidth of the eRedCap terminal is 12 resource blocks (RB). That is, when resources occupied by the first channel sent by the network device do not exceed 12 RBs, the terminal may successfully perform a baseband processing on the first channel, and when the resources occupied by the first channel sent by the network device exceed 12 RBs, the terminal may not perform the baseband processing on the first channel. When the SCS is 15 kHz, the first channel baseband bandwidth the eRedCap terminal is 25 RBs. That is, when the resources occupied by the first channel sent by the network device do not exceed 25 RBs, the terminal may successfully perform the baseband processing on the first channel, and when the resources occupied by the first channel sent by the network device exceed 25 RBs, the terminal may not perform the baseband processing on the first channel.

Optionally, a specific reason for "when the resources occupied by the first channel exceeding the first channel baseband bandwidth of the terminal, not notifying, by the lower layer, the higher layer of the terminal that the second channel is received, or performing, by the lower layer, the first operation to notify the higher layer" is described in detail below.

Optionally, in some embodiments, the resources occupied by the first channel exceeding the first channel baseband bandwidth of the terminal means the contention resolution failure of the terminal. Specifically, as may be understood from the foregoing, in a communication system, since the RedCap terminal (or the eRedCap terminal) has a reduced first channel baseband bandwidth compared to the normal terminal, in order to ensure a successful communication between the network device and the RedCap terminal (or the eRedCap terminal), when the network device needs to send the first channel to the RedCap terminal (or eRedCap terminal), it will ensure that the resources occupied by the first channel do not exceed the first channel baseband bandwidth of the RedCap terminal (or the eRedCap terminal). That is, for the RedCap terminal (or the eRedCap terminal), if the resources occupied by the first channel received exceed the first channel baseband bandwidth of the RedCap terminal, it indicates that the first channel is not intended for this terminal. Therefore, in some embodiments of the present disclosure, when the lower layer of the terminal (the terminal in the embodiments of the present disclosure refers to the RedCap terminal or the eRedCap terminal) determines that the first channel is not intended for itself, when the terminal determines that resources occupied by the first channel scheduled by the second channel exceed the first channel baseband bandwidth of the terminal, based on the second channel received. That is, the terminal determines that the Msg4 or MsgB carried in the first channel is not intended for itself, and thus the C-RNTI included in the Msg4 or MsgB is not the C-RNTI of the target cell that the terminal intends to access, indicating the contention resolution failure for the terminal.

**In** this case, in some embodiments, the lower layer of the terminal does not notify the higher layer that the second channel is received. Consequently, the higher layer of the terminal will consider that the terminal does not receive the second channel. However, at the same time, the contention resolution timer continues running. Since the lower layer does not notify the higher layer that the second channel is received, the higher layer of the terminal will still consider that the terminal does not receive the second channel until the contention resolution timer expires. Since the second channel is used to schedule the first channel, when the higher layer of the terminal determines that the terminal does not receive the second channel, it may consequently determine that the terminal will be unable to receive the first channel scheduled by the second channel, and thus may not receive the Msg4 or MsgB carried in the first channel. Accordingly, the higher layer of the terminal will determine the contention resolution failure.

Alternatively, in other embodiments, when the lower layer of the terminal determines, based on the received second channel, that the resources occupied by the first channel scheduled by the second channel exceed the first channel baseband bandwidth of terminal, the lower layer of the terminal may perform the first operation to notify the higher layer. Optionally, the first operation may include at least one of: notifying that the second channel is received, or notifying that the second channel received is invalid. For example, in some embodiments, the first operation may include: the lower layer of the terminal notifying the higher layer that the second channel is received. Alternatively, in other embodiments, the first operation may include: the lower layer of the terminal notifying the higher layer that the second channel received is invalid. Alternatively, in yet other embodiments, the first operation may include: the lower layer of the terminal notifying the higher layer both that the second channel is received and that the second channel received is invalid.

Optionally, in some embodiments, notifying that the second channel is received may include: sending, by a lower layer, a first indication to the higher layer, and the first indication indicating that the lower layer receives the second channel.

Optionally, in some embodiments, notifying that the second channel received is invalid may include at least one of: sending, by a lower layer, a second indication which indicates that the resources occupied by the first channel exceed the first channel baseband bandwidth of the terminal to the higher layer, sending, by a lower layer, a third indication which indicates the contention resolution failure to the higher layer, or sending, by a lower layer, a fourth indication which indicates that the second channel received by the lower layer is invalid to the higher layer.

Optionally, in some embodiments, if the lower layer of the terminal notifies the higher layer that the second channel received is invalid, the higher layer of the terminal will directly determine that the second channel is not intended for the terminal. Since the second channel is used to schedule the first channel, when the higher layer of the terminal determines that the second channel received is not intended for the terminal, the higher layer of the terminal will also directly determine that the first channel scheduled by the second channel is not intended for the terminal. Consequently, the Msg4 or MsgB carried in the first channel is also not intended for the terminal. As a result, the higher layer of the terminal will directly determine the contention resolution failure, without waiting until the contention resolution timer expires. Thus, it may avoid an unnecessary blind detection, shorten a random access delay, and reduce a terminal power consumption.

Optionally, in other embodiments, when the lower layer of the terminal notifies the higher layer that the second channel is received but does not notify that the second channel received is invalid, the higher layer of the terminal will consider that the lower layer successfully receives the second channel. In this case, the terminal will continue to perform subsequent random access operations based on a radio access network (RAN) 2 protocol. For example, the higher layer will continuously wait for a notification from the lower layer of the terminal regarding whether the first channel is received. Moreover, when the first channel is received, it will determine whether the random access of the terminal is successful based on the Msg4 or MsgB carried in the first channel. If it is determined that the random access is successful before the expiration of the contention resolution timer, it is considered as a successful contention resolution. If the random access is not successful in a case that the contention resolution timer expires, it is considered as the contention resolution failure.

It should be noted that the above description involving operations performed by the higher layer of the terminal when the lower layer notifies the higher layer that the second channel is received but does not notify that the second channel received is invalid is merely an exemplary illustration of the present disclosure. Optionally, the higher layer of the terminal may also perform other operations. It should be understood that solutions involving other operations performed by the higher layer of the terminal when the lower layer notifies the higher layer that the second channel is received but does not notify that the second channel received is invalid should also fall within the protection scope of the present disclosure.

Additionally, it should be noted that in some embodiments, when the lower layer of the terminal receives the second channel for scheduling the first channel and the resources occupied by the first channel exceed the first channel baseband bandwidth of the terminal, the lower layer of the terminal may not notify the higher layer that the second channel is received or may perform a first operation to notify the higher layer. Furthermore, the lower layer of the terminal may either discard or not discard the first information in the second channel.

In summary, in the processing method provided by the embodiments of the present disclosure, in response to the lower layer of the terminal receiving the second channel for scheduling the first channel and the resources occupied by the first channel exceeding the first channel baseband bandwidth of the terminal, the lower layer of the terminal may not notify the higher layer that the second channel is received, or may perform the first operation to notify the higher layer. The first operation may include at least one of: notifying that the second channel is received, or notifying that the second channel received is invalid. Thus, for a scenario where the terminal determines that the resources occupied by the first channel exceed the first channel baseband bandwidth of the terminal, the method of the present disclosure provides an interaction method between the lower layer and the higher layer of the terminal. This enables the higher layer of the terminal to determine whether the contention resolution failure occurs for the terminal, thereby determining an execution flow of a random access procedure and ensuring a stability of the random access.

FIG. 3 is a flow chart illustrating a processing method according to an embodiment of the disclosure. The method is performed by a terminal. As shown in FIG. 3, the method may include the following steps.

**In** step 301, in response to the lower layer not notifying the higher layer of the terminal that the second channel is received, in a case that the higher layer determines that a contention resolution timer expires, at least one of the following operations is performed: determining a contention resolution failure; performing a random backoff operation; or retransmitting a physical random access channel (PRACH).

Optionally, as may be understood from the descriptions in the foregoing embodiments, when the lower layer does not notify the higher layer of the terminal that the second channel is received and the higher layer determines that the contention resolution timer expires, it indicates a current contention resolution failure for the terminal. In this case, in addition to determining the contention resolution failure for the terminal, in some embodiments, the terminal may retransmit the PRACH to re-initiate a random access procedure. Alternatively, in other embodiments, the terminal may perform a random backoff operation. Optionally, the random backoff operation may include: waiting, by the terminal, for a period of time before re-initiating the random access procedure.

**In** summary, in the processing method provided by the embodiments of the present disclosure, in response to the lower layer not notifying the higher layer of the terminal that the second channel is received, in the case that the higher layer determines that the contention resolution timer expires, at least one of the following operations is performed: determining the contention resolution failure, performing the random backoff operation, or retransmitting the PRACH. Thus, for the scenario where the lower layer does not notify the higher layer of the terminal that the second channel is received, the present disclosure further specifies subsequent processing of the higher layer, thereby determining an execution flow of the random access procedure and ensuring a stability of a random access.

FIG. 4A is a flow chart illustrating a processing method according to an embodiment of the disclosure. The method is performed by a terminal. As shown in FIG. 4A, the method may include the following steps.

**In** step 401A, in response to the lower layer performing a first operation to notify the higher layer, at least one of the following operations is performed by the higher layer: determining a competition resolution failure, stopping a competition resolution timer, determining that a competition resolution timer expires, performing a random backoff operation, or retransmitting a PRACH.

Optionally, in some embodiments, an application scenario of the embodiment in FIG. 4A may be a scenario where the first operation performed by the lower layer to notify the higher layer includes: notifying, by the lower layer, the higher layer that the second channel received is invalid. Optionally, as understood from the descriptions in the foregoing embodiments, when the lower layer notifies the higher layer that the second channel received is invalid, it indicates that the second channel received by the lower layer of the terminal is not intended for the terminal. In this case, in some embodiments, the higher layer of the terminal may directly determine a contention resolution failure and may directly stop the contention resolution timer, or may directly determine that the contention resolution timer expires (for example, even if the contention resolution timer does not expire, it is still considered that the contention resolution timer expires). There is no need to continue running the contention resolution timer or wait until the contention resolution timer expires to determine the contention resolution failure. Thus, it may avoid excessive unnecessary blind detections, shorten a random access delay, and reduce a terminal power consumption. Alternatively, in some embodiments, the higher layer of the terminal may also retransmit the PRACH to re-initiate a random access procedure. Alternatively, in other embodiments, the terminal may also perform the random backoff operation. Optionally, the random backoff operation may be understood as the terminal waiting for a period of time before re-initiating the random access procedure.

**In** summary, in the processing method provided by the embodiments of the present disclosure, in response to the lower layer performing the first operation to notify the higher layer, the higher layer performs at least one of the following: determining the contention resolution failure, stopping the contention resolution timer, determining the contention resolution timer expires, performing the random backoff operation, or retransmitting the PRACH. Thus, for the scenario where the lower layer performs the first operation to notify the higher layer, the present disclosure further specifies subsequent processing of the higher layer, thereby determining an execution flow of the random access procedure and ensuring a stability of random access. Moreover, after the lower layer performs the first operation to notify the higher layer, the higher layer may directly determine the contention resolution failure, stop the contention resolution timer, or determine that the contention resolution timer expires, etc. Thus there is no need to continue running the competition resolution timer, or there is no need to wait until the competition resolution timer expires before determining the competition resolution failure, thereby avoiding excessive unnecessary blind detections, shortening a random access delay, and reducing a terminal power consumption.

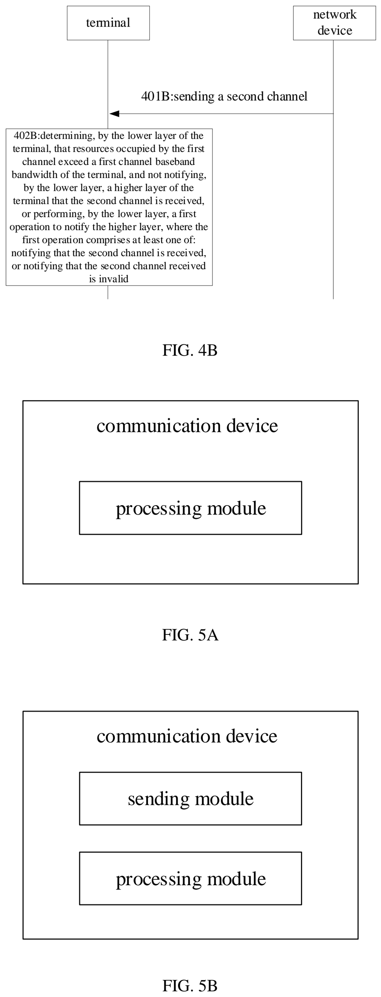

FIG. 4B is a flow chart illustrating a processing method according to an embodiment of the disclosure. The method is performed by a communication system and the communication system includes a network device and a terminal. As shown in FIG. 4B, the method may include the following steps.

**In** step 401B, the network device sends a second channel to a lower layer of a terminal, and the second channel is used to schedule a first channel.

**In** step 402B, the lower layer of the terminal determines that resources occupied by the first channel exceed a first channel baseband bandwidth of the terminal, and the lower layer does not notify a higher layer of the terminal that the second channel is received, or the lower layer performs a first operation to notify the higher layer, and the first operation includes at least one of: notifying that the second channel is received, or notifying that the second channel received is invalid.

For detailed descriptions of steps 401B-402B, reference may be made to the descriptions in the foregoing embodiments.

**In** summary, in the communication device provided by the embodiments of the present disclosure, in response to the lower layer of the terminal receiving the second channel for scheduling the first channel, if the lower layer determines that the resources occupied by the first channel exceed the first channel baseband bandwidth of the terminal, the lower layer of the terminal does not notify the higher layer that the second channel is received, or the lower layer of the terminal may perform the first operation to notify the higher layer. The first operation may include at least one of: notifying that the second channel is received, or notifying that the second channel received is invalid. Thus, for the scenario where the terminal determines that resources occupied by the first channel exceed the first channel baseband bandwidth of the terminal, the method of the present disclosure provides an interaction method between the lower layer and the higher layer of the terminal. This enables the higher layer of the terminal to determine a contention resolution failure, thereby determining an execution flow of a random access procedure and ensuring a stability of a random access.

FIG. 5A is a block diagram illustrating a communication device according to an embodiment of the disclosure. As shown in FIG. 5A, the communication device may include a processing module, configured to: in response to a lower layer of a terminal receiving a second channel for scheduling a first channel and resources occupied by the first channel exceeding a first channel baseband bandwidth of the terminal, not notify, by the lower layer, a higher layer of the terminal that the second channel is received, or perform, by the lower layer, a first operation to notify the higher layer, and the first operation includes at least one of: notifying that the second channel is received, or notifying that the second channel received is invalid.

**In** summary, in the communication device provided by the embodiments of the present disclosure, in response to the lower layer of the terminal receiving the second channel for scheduling the first channel, if the lower layer determines that the resources occupied by the first channel exceed the first channel baseband bandwidth of the terminal, the lower layer of the terminal does not notify the higher layer that the second channel is received, or the lower layer of the terminal may perform the first operation to notify the higher layer. The first operation may include at least one of: notifying that the second channel is received, or notifying that the second channel received is invalid. Thus, for the scenario where the terminal determines that resources occupied by the first channel exceed the first channel baseband bandwidth of the terminal, the method of the present disclosure provides an interaction method between the lower layer and the higher layer of the terminal. This enables the higher layer of the terminal to determine a contention resolution failure, thereby determining an execution flow of a random access procedure and ensuring a stability of a random access.

Optionally, in an embodiment of the present disclosure, the first channel is used to carry an MsgB or an Msg4, and the second channel is used to carry first information and the first information is used to schedule the first channel.

Optionally, in an embodiment of the present disclosure, the processing module is further configured to send, by the lower layer, a first indication to the higher layer, and the first indication indicates that the lower layer receives the second channel; notify that the second channel received is invalid, including at least one of: sending, by the lower layer, a second indication to the higher layer, and the second indication indicates that the resources occupied by the first channel exceed the first channel baseband bandwidth of the terminal; sending, by the lower layer, a third indication to the higher layer, and the third indication indicates a contention resolution failure; or sending, by the lower layer, a fourth indication to the higher layer, and the fourth indication indicates that the second channel received by the lower layer is invalid.

Optionally, in an embodiment of the present disclosure, in response to the lower layer not notifying the higher layer of the terminal that the second channel is received, the communication device is further configured to: in a case that the higher layer determines that a contention resolution timer expires, perform at least one of: determining a contention resolution failure, performing a random backoff operation, or retransmitting a physical random access channel (PRACH), and the competition resolution timer is started when the terminal last transmitted an Msg3 or MsgA.

Optionally, in an embodiment of the present disclosure, in response to the lower layer performing the first operation to notify the higher layer, the communication device is further configured to perform at least one of: determining a competition resolution failure, stopping a competition resolution timer, determining that a competition resolution timer expires, performing a random backoff operation, or retransmitting a PRACH.

Optionally, in an embodiment of the present disclosure, the communication device is further configured to discard or not discard the first information.

Optionally, in an embodiment of the present disclosure, the first channel is a physical downlink shared channel (PDSCH), the second channel is a physical downlink control channel (PDCCH), and the first information is downlink control information (DCI).

Optionally, in an embodiment of the present disclosure, the higher layer includes a media access control (MAC) layer, and the lower layer includes a physical layer.

Optionally, in an embodiment of the present disclosure, the terminal is a reduced capability (Redcap) terminal or an eRedCap terminal.

FIG. 5B is a block diagram illustrating a communication device according to an embodiment of the disclosure. As shown in FIG. 5B, the communication device may include a sending module and a processing module. The sending module is configured to: send, by a network device, a second channel to a lower layer of a terminal, where the second channel is used to schedule a first channel. The processing module is configured to: determine, by the lower layer of the terminal, that resources occupied by the first channel exceed a first channel baseband bandwidth of the terminal and not notify, by the lower layer, a higher layer of the terminal that the second channel is received, or perform, by the lower layer, a first operation to notify the higher layer, and the first operation includes at least one of: notifying that the second channel is received, or notifying that the second channel received is invalid.

**In** summary, in the communication device provided by the embodiments of the present disclosure, in response to the lower layer of the terminal receiving the second channel for scheduling the first channel, if the lower layer determines that the resources occupied by the first channel exceed the first channel baseband bandwidth of the terminal, the lower layer of the terminal may not notify the higher layer that the second channel is received, or the lower layer of the terminal may perform the first operation to notify the higher layer. The first operation may include at least one of: notifying that the second channel is received, or notifying that the second channel received is invalid. Thus, for the scenario where the terminal determines that resources occupied by the first channel exceed the first channel baseband bandwidth of the terminal, the method of the present disclosure provides an interaction method between the lower layer and the higher layer of the terminal. This enables the higher layer of the terminal to determine a contention resolution failure, thereby determining an execution flow of a random access procedure and ensuring a stability of a random access.

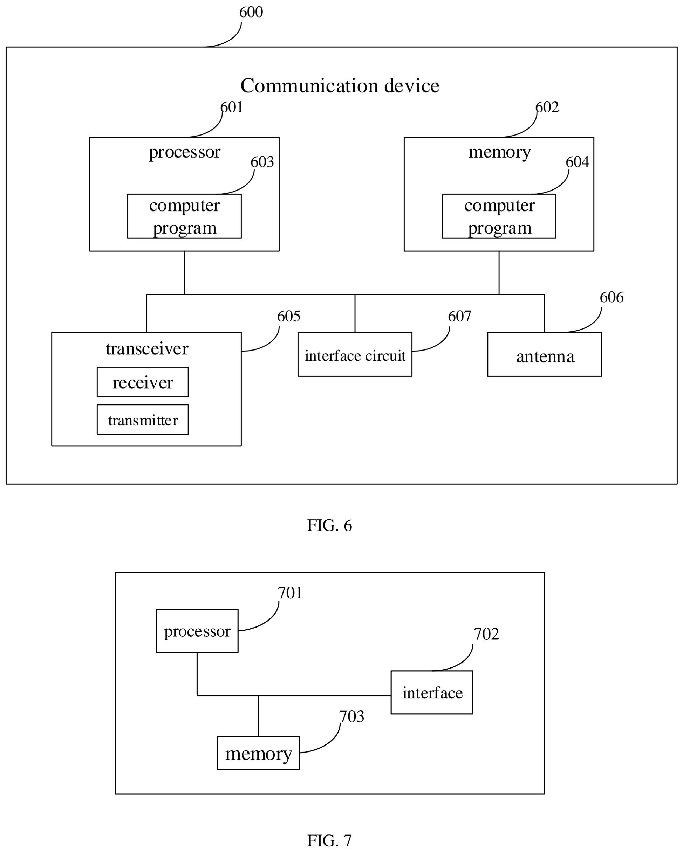

Please refer to FIG. 6, which is a block diagram illustrating another communication device 600 according to an embodiment of the disclosure. The communication device 600 can be a terminal, a base station, or a chip, a system on chip or a processor that supports the base station to implement the above method, or a chip, a system on chip or a processor that supports the terminal to implement the above method. The communication device can be configured to implement the method described in the method embodiments, and for details reference can be made to the descriptions in the method embodiments.

The communication device 600 can include one or more processors 601. The processor 601 can be a general processor or a dedicated processor. For example, the processor can be a baseband processor or a central processor. The baseband processor can be configured to process a communication protocol and communication data, and the central processor can be configured to control a communication device (e.g., a base station, a baseband chip, a terminal, a terminal chip, a DU or CU, etc.), to execute a computer program, and process data of the computer program.

Optionally, the communication device 600 can further include one or more memories 602 with a computer program 604 stored thereon. The processor 601 executes the computer program 604, so that the communication device 600 performs the method as described in the above method embodiments. Optionally, the memory 602 can further store data. The communication device 600 and the memory 602 can be independently configured or integrated together.

Optionally, the communication device 600 can further include a transceiver 605 and an antenna 606. The transceiver 605 can be referred to as a transceiving unit, a transceiver machine or a transceiving circuit, etc., for implementing a transceiving function. The transceiver 605 can include a receiver and a transmitter. The receiver can be referred to as a receiver machine or a receiving circuit, etc., for implementing a receiving function; the transmitter can be referred to as a transmitter machine or a transmitting circuit, etc., for implementing a transmitting function.

Optionally, the communication device 600 can further include one or more interface circuits 607. The interface circuit 607 is configured to receive code instructions and transmit the code instructions to the processor 601. The processor 601 runs the code instructions, to cause the communication device 600 to perform the method as described in the above method embodiments.

In an implementation, the processor 601 can include a transceiver configured to implement receiving and transmitting functions. For example, the transceiver can be a transceiving circuit, or an interface, or an interface circuit. The transceiving circuit, the interface or the interface circuit configured to implement the receiving and transmitting functions can be separate or integrated together. The transceiving circuit, the interface or the interface circuit can be configured to read and write codes/data, or the transceiving circuit, the interface or the interface circuit can be configured to transmit or deliver a signal.

In an implementation, the processor 601 can be stored with a computer program. When the computer program 603 is running on the processor 601, the communication device 600 can be caused to perform the method as described in the above method embodiments. The computer program 603 can be solidified in the processor 601, in which case the processor 601 can be implemented by hardware.

In an implementation, the communication device 600 can include a circuit that can implement a transmitting or receiving or communication function in the above method embodiments. The processor and the transceiver described in the disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver can further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments can be a base station or terminal, but the scope of the communication device described in the disclosure is not limited, and a structure of the communication device may not be limited by FIG. 6. The communication device can be a stand-alone device or can be a part of a larger device. For example, the communication device can be the following:
(1) a stand-alone integrated circuit (IC), or a chip, or a system on chip or a subsystem;
(2) a set of one or more ICs, optionally, which can also include a storage component for storing data and a computer program;
(3) an ASIC, such as a Modem;
(4) a module that can be embedded within other devices;
(5) a receiver, a terminal, a smart terminal, a cellular phone, a wireless device, a handset, a mobile unit, a vehicle-mounted device, a base station, a cloud device, an artificial intelligence device, etc.;
(6) others, and so forth.

In the case that the communication device can be a chip or a system on chip, reference can be made to FIG. 7, which is a block diagram illustrating a chip. The chip in FIG. 7 includes a processor 701 and an interface 702. The number of processors 701 can be one or more and the number of interfaces 702 can be more than one.

Optionally, the chip further includes a memory 703, configured to store necessary computer program and data.

Those skilled in the related art can understand that various illustrative logical blocks and steps listed in embodiments of the disclosure, can be implemented by electronic hardware, computer software or a combination of electronic hardware and computer software. Whether the function is implemented by hardware or software depends on specific applications and design requirements for an overall system. Those skilled in the art can implement the functions by using various methods for each specific application, but such an implementation should not be understood as beyond the protection scope of embodiments of the disclosure.

A readable storage medium with instructions stored is further provided in the disclosure. When the instructions are executed by a computer, the functions in any method embodiment are implemented.

A computer program product is further provided in the disclosure. The computer program product implements functions of any of the above method embodiments when executed by a processor.

In the above embodiments, the functions can be wholly or partially implemented by software, hardware, firmware, or any combination of them. When implemented by software, the functions can be implemented in whole or in part in the form of a computer program product. The computer program product includes one or more computer programs. Procedures or functions according to embodiments of the disclosure are wholly or partially generated when the computer program is loaded and executed on a computer. The computer can be a general computer, a special purpose computer, a computer network, or other programmable device. The computer program can be stored in a computer-readable storage medium or transmitted from one computer-readable storage medium to another. For example, the computer program can be transmitted from one website, computer, server, or data center to another via wire (such as a coaxial cable, a fiber optic, a digital subscriber line (DSL)) or wireless (such as infrared, wireless, microwave). The computer-readable storage medium can be any available medium that can be accessed by a computer or a data storage device such as a server that integrates one or more of the available media, and a data center. The readable medium can be a magnetic medium (such as a floppy disk, a hard disk and a magnetic tape), an optical medium (such as a digital video disk (DVD)), or a semiconductor medium (such as a solid state disk (SSD)).

Those skilled in the art can understand that various numbers such as first and second involved in the present disclosure are distinguished merely for convenience of description, and are not intended to limit the scope of the embodiments of the disclosure, but also to indicate an order of precedence.

The phase "at least one" in the disclosure can also be described as one or more, and the phase "a plurality of" can refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure can be configured or predefined. Values of information in tables are only examples, and can be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, can be made based on the above tables. Names of parameters shown in headers in the tables can be other names understandable by the communication apparatus, and values or representations of the parameters can be other values or representations understandable by the communication apparatus. When the above tables are implemented, other data structures can be used, and for example, arrays, queues, containers, stacks, linear lists, pointers, linked lists, trees, graphs, structures, classes, heaps or hash tables can be used.

Predefined in the disclosure can be understood as defined, predefined, stored, pre-stored, pre-negotiated, pre-configured, solidified or pre-fired.

Those skilled in the related art can realize that, in combination with units and algorithm steps of the examples described in the embodiments of the disclosure, can be implemented by electronic hardware or a combination of electronic hardware and computer software. Whether the functions are executed by hardware or software depends on a specific application and a design constraint of the technical solution. Those skilled in the art can adopt different methods for each specific application to implement the described functions, but such implementation should not be considered beyond the scope of the disclosure.

Those skilled in the art can clearly understand that, for a specific working process of a system, an apparatus and a unit described above reference can be made to a corresponding process in the above method embodiments, and details will not be repeated here.

The above are only specific implementations of the disclosure. However, the protection scope of the disclosure is not limited here. Changes and substitutions that can be easily considered by those skilled in the art shall be contained within the protection scope of the disclosure. Thus, the protection scope of the disclosure shall be subject to the protection scope of claims.

## Claims

1. A processing method, performed by a terminal, comprising:
in response to a lower layer of the terminal receiving a second channel for scheduling a first channel and resources occupied by the first channel exceeding a first channel baseband bandwidth of the terminal, not notifying, by the lower layer, a higher layer of the terminal that the second channel is received, or performing, by the lower layer, a first operation to notify the higher layer, wherein the first operation comprises at least one of: notifying that the second channel is received, or notifying that the second channel received is invalid.

2. The method according to claim 1, wherein the first channel is used to carry an MsgB or an Msg4, and the second channel is used to carry first information and the first information is used to schedule the first channel.

3. The method according to claim 2,
wherein notifying that the second channel is received comprises:
sending, by the lower layer, a first indication to the higher layer, wherein the first indication indicates that the lower layer receives the second channel;
wherein notifying that the second channel received is invalid comprises at least one of:
sending, by the lower layer, a second indication to the higher layer, wherein the second indication indicates that the resources occupied by the first channel exceed the first channel baseband bandwidth of the terminal;
sending, by the lower layer, a third indication to the higher layer, wherein the third indication indicates a contention resolution failure; or
sending, by the lower layer, a fourth indication to the higher layer, wherein the fourth indication indicates that the second channel received by the lower layer is invalid.

4. The method according to claim 2, wherein in response to the lower layer not notifying the higher layer of the terminal that the second channel is received, the method further comprises:
in a case that the higher layer determines that a contention resolution timer expires, performing at least one of:
determining a contention resolution failure;
performing a random backoff operation; or
retransmitting a physical random access channel (PRACH),
wherein the competition resolution timer is started when the terminal last transmitted an Msg3 or MsgA.

5. The method according to claim 2, wherein in response to the lower layer performing the first operation to notify the higher layer, the method further comprises at least one of:
determining a competition resolution failure;
stopping a competition resolution timer;
determining that a competition resolution timer expires;
performing a random backoff operation; or
retransmitting a PRACH.

6. The method according to claim 2, further comprising:
discarding or not discarding the first information.

7. The method according to claim 2, wherein the first channel is a physical downlink shared channel (PDSCH), the second channel is a physical downlink control channel (PDCCH), and the first information is downlink control information (DCI).

8. The method according to any one of claims 1-7, wherein the higher layer comprises a media access control (MAC) layer, and the lower layer comprises a physical layer.

9. The method according to any one of claims 1-7, wherein the terminal is a reduced capability (Redcap) terminal or an eRedCap terminal.

10. A processing method, performed by a communication system, comprising:
sending, by a network device, a second channel to a lower layer of a terminal, wherein the second channel is used to schedule a first channel;
determining, by the lower layer of the terminal, that resources occupied by the first channel exceed a first channel baseband bandwidth of the terminal, and not notifying, by the lower layer, a higher layer of the terminal that the second channel is received, or performing, by the lower layer, a first operation to notify the higher layer, wherein the first operation comprises at least one of: notifying that the second channel is received, or notifying that the second channel received is invalid.

11. A communication device, comprising:
a processing module, configured to: in response to a lower layer of a terminal receiving a second channel for scheduling a first channel and resources occupied by the first channel exceeding a first channel baseband bandwidth of the terminal, not notify, by the lower layer, a higher layer of the terminal that the second channel is received, or perform, by the lower layer, a first operation to notify the higher layer, wherein the first operation comprises at least one of: notifying that the second channel is received, or notifying that the second channel received is invalid.

12. A communication device, comprising:
a sending module, configured to: send, by a network device, a second channel to a lower layer of a terminal, wherein the second channel is used to schedule a first channel;
a processing module, configured to: determine, by the lower layer of the terminal, that resources occupied by the first channel exceed a first channel baseband bandwidth of the terminal and not notify, by the lower layer, a higher layer of the terminal that the second channel is received, or perform, by the lower layer, a first operation to notify the higher layer, wherein the first operation comprises at least one of: notifying that the second channel is received, or notifying that the second channel received is invalid.

13. A communication device, comprising a processor and a memory, wherein the memory stores a computer program that, when executed by the processor, causes the communication device to implement the method according to any one of claims 1 to 9.

14. A communication device, comprising: a processor and an interface circuit, wherein
the interface circuit is configured to receive code instructions and transmit the code instructions to the processor; and
the processor is configured to run the code instructions to perform the method according to any one of claims 1 to 9.

15. A computer-readable storage medium for storing instructions that, when executed, cause the method according to any one of claims 1 to 9 to be implemented.
